(19) Europäisches Patentamt
European Patent Office
Office européen des brevets

(11) Veröffentlichungsnummer: **0 048 792**
**B1**

(12) # EUROPÄISCHE PATENTSCHRIFT

(45) Veröffentlichungstag der Patentschrift: **18.04.84**

(51) Int. Cl.³: **C 08 L 95/00**, C 08 K 3/34

(21) Anmeldenummer: **81104036.9**

(22) Anmeldetag: **26.05.81**

(54) **Gussasphaltmischung.**

(30) Priorität: **27.09.80 DE 3036537**

(43) Veröffentlichungstag der Anmeldung: **07.04.82 Patentblatt 82/14**

(45) Bekanntmachung des Hinweises auf die Patenterteilung: **18.04.84 Patentblatt 84/16**

(84) Benannte Vertragsstaaten: **AT BE CH DE FR GB LI NL SE**

(56) Entgegenhaltungen:
**DE - A - 2 423 644**
**FR - A - 2 440 968**

(73) Patentinhaber: **Degussa Aktiengesellschaft, Weissfrauenstrasse 9, D-6000 Frankfurt am Main 1 (DE)**

(72) Erfinder: **Müller, Karl-Hans, Dr., Rober-Koch-Strasse 17, D-6454 Bruchköbel (DE)**
Erfinder: **Barthel, Walter, Gartenstrasse 7, D-6456 Langenselbold (DE)**

**EP 0 048 792 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Gussasphaltmischung

Gussasphalt wird beschrieben in DIN 4109, Blatt 4, Seite 3, Abschnitt 5.3.5 (Gussasphaltstrich), in DIN 18 354 und in Der Bundesanzeiger für Verkehr, Technische Vorschriften und Richtlinien für den Bau bituminöser Fahrbahndecken Teil 6, Seite 7, Ausgabe 1975.

Dementsprechend ist Gussasphalt eine dichte bituminöse Masse aus Splitt, Sand, Füller und Strassenbaubitumen oder Strassenbaubitumen und Naturasphalt, deren Mineralstoffgemisch hohlraumarm zusammengesetzt ist. Der Bindemittelgehalt ist auf die Hohlräume der Mineralmasse so abgestimmt, dass diese im Einbauzustand voll ausgefüllt sind und ein geringer Überschuss an Bindemittel vorhanden ist. Dieses Gemisch ist in heissem Zustand giess- und streichbar und bedarf beim Einbau keiner Verdichtung. Die Oberfläche wird unmittelbar nach dem Einbau des Gussasphaltes durch Aufrauhen oder Abstumpfen nachbehandelt.

Von Gussasphalt für Strassen- und Estrichbau wird eine hohe Standfestigkeit (Verformungswiderstand) und möglichst gleichzeitig eine gute Verarbeitungsfähigkeit verlangt. Da ein derartiger hohlraumfreier Asphalt keine Rüttel- oder Walzenverdichtung erfährt, muss eine vernünftige Giess- bzw. Glättfähigkeit vorhanden sein. Im Strassenbau wird ein Grossteil der mit Gussasphalt zu verlegenden Flächen mit Fertigern eingebaut, so dass auch ein steifer eingestelltes Material noch verarbeitet werden kann. Anders verhält es sich an Stellen, wo nur Handeinbau erfolgen kann, wie z.B. an Einbuchtungen, auf Brükken, auf Rampen, bei Rinnen etc. Hier kann nur ein geschmeidiger Asphalt sauber verarbeitet werden.

Spezielle Probleme gibt es beim Verlegen von Gussasphalt-Industriefussböden. Die Belagstärken bewegen sich zwischen 20–40 mm, wobei Unebenheiten des Untergrundes berücksichtigt werden müssen. Eine einwandfreie Ausbringung der heissen Asphaltmasse sowie rissfreie, widerstandsarme Glättung ist erforderlich. Ziel ist immer eine grosse Verlegeleistung der Kolonnen, da der Endpreis der Bauleistung sehr lohnabhängig ist. Bei in der Verlegeleistung verbesserten Industriefussböden akzeptiert man einen höheren Materialeinstand, wenn in der Endrechnung ein Preisvorteil entsteht.

Gussasphaltaufmischungen kann man durch gezielte Mineralzusammensetzung (z.B. «starke» Füller) oder Bitumenreduzierung bis auf Minimalgrenze steif einstellen. Die dadurch erhöhte Standfestigkeit geht auf jeden Fall zu Lasten der Verlegeleistung. Sinnvoller dürfte es sein, durch wirkungsvolle Additive einen höheren Verformungswiderstand oder eine geringere Eindringtiefe und gleichzeitig eine gute Geschmeidigkeit der Asphaltmassen anzustreben.

Zumischungen von Fällungskieselsäuren gemäss DE-OS 28 48 583 in Gussasphalt ergaben Verbesserungen der Verformungsstabilität und der Verringerung der Schwankungen durch Bindemittelstreuungen, jedoch gleichzeitig eine Verschlechterung der Verarbeitungswilligkeit. Ein bautechnischer Vorteil wurde somit durch einen Nachteil fast egalisiert.

Bekannt sind aus der EP-PS 0 004 583 die günstigen Auswirkungen von feindispersen Wasserdampfbläschen in Asphaltmassen. Als Wasserspender sind in diesem Fall kristallwasserhaltige natürliche Mineralien, z.B. Gips-Dihydrat ($CaSO_4 \cdot 2\,H_2O$) aufgeführt.

Gegenstand der Erfindung ist eine Gussasphaltmischung, die 0,2 bis 5 Gew.-% eines kristallinen pulverförmigen syntehtischen Zeolithen oder Zeolithgemisches, bezogen auf die gesamte Mischung, enthält.

In einer besonderen Ausführungsform der Erfindung kann die Gussasphaltmischung zusätzlich 0,1 bis 2 Gew.-% gefällte Kieselsäure, bezogen auf die gesamte Mischung enthalten.

Als synthetische Kieselsäure kann man eine gefällte Kieselsäure oder eine gefällte und sprühgetrocknete Kieselsäure verwenden.

In einer vorzugsweisen Ausführungsform kann die Gussasphaltmischung 0,1 bis 1,2 Gew.-% an synthetischer Kieselsäure enthalten.

Die eingesetzte synthetische Kieselsäure kann eine BET-Oberfläche von 150 bis 250 m²/g aufweisen.

Als eine gefällte Kieselsäure kann man eine Kieselsäure mit den folgenden physikalisch-chemischen Kenndaten einsetzen:

| | | |
|---|---|---|
| Aussehen | lockeres, weisses Pulver | |
| Röntgenstruktur | amorph | |
| Oberfläche | 170 ± 25 m²/g (nach BET) | |
| Mittlere Grösse der Primärteilchen | 18 Nanometer | |
| spezifisches Gewicht | 2,05 g/ml | |
| Reinheitsgrad | $SiO_2$ | 98 % |
| | $Na_2O$ | 1 % |
| | $Al_2O_3$ | 0,2 % |
| | $SO_3$ | 0,8 % |
| Trocknungsverlust 1) | 6 % | |
| Glühverlust 2)3) | 5 % | |
| pH-Wert 4) | 6,3 % | |
| Löslichkeit | praktisch unlöslich in Wasser | |
| Charakteristik | gefällte Kieselsäure | |

| | |
|---|---|
| Stampfdichte[5] | 200 g/Liter |
| Siebrückstand nach Mocker (DIN 53 580) | 0,2 % |

[1] DIN 53 198, Verf. A
[2] bezogen auf die 2 Stunden bei 105°C getrocknete Substanz DIN 55 921
[3] DIN 52 911
[4] DIN 53 200
[5] DIN 53 194

Als gefällte Kieselsäure kann man eine Kieselsäure einsetzen, welche dieselben physikalisch-chemischen Kenndaten aufweist und sich lediglich in der Höhe der Stampfdichte von der oben genannten unterscheidet. Die Stampfdichte kann z.B. 70 g/l betragen.

Als eine gefällte und sprühgetrocknete Kieselsäure kann man eine Kieselsäure mit den folgenden physikalisch-chemischen Kenndaten verwenden:

| | | |
|---|---|---|
| Oberfläche nach BET | $m^2/g$ | 190 |
| Mittlere Grösse der Primärteilchen | Nanometer | 18 |
| Mittlere Grösse der Sekundärteilchen | Mikrometer | 80 |
| Stampfdichte (DIN 53 194) | g/l | 220 |
| Trocknungsverlust (DIN 55 921) (2 Std. bei 105°C) | % | 6 |
| Glühverlust[1] (DIN 55 921) (2 Std. bei 1000°C) | % | 5 |
| pH-Wert (DIN 53 200) | | 6,3 |
| $SiO_2$ (DIN 55 921)[2] | % | 98 |
| $Al_2O_3$ | % | 0,2 |
| $Fe_2O_3$ | % | 0,03 |
| $Na_2O$ | % | 1 |
| $SO_3$ | % | 0,8 |
| Siebrückstand nach Mocker (DIN 53 580) | % | 0,5 |
| Ölzahl (nach DIN 53 199) | g/100 g | 230 |

[1] bezogen auf die 2 Stunden bei 105°C getrocknete Substanz
[2] bezogen auf die 2 Stunden bei 1000°C geglühte Substanz

Die gleiche gefällte und sprühgetrocknete Kieselsäure kann auch im vermahlenen Zustand mit einer mittleren Grösse der Sekundärteilchen von z.B. 5 Mikrometer verwendet werden.

Der Begriff Zeolith entspricht der Beschreibung nach D.W. Breck, «Zeolite moleculare sieves», Wiley Interscience 1974, Seiten 133 bis 180. Die eingesetzten Zeolithe können einen Wassergehalt von bis zu 27% aufweisen

Als pulverförmigen kristallinen synthetischen Zeolithen kann die erfindungsgemässe Gussasphaltmischung einen Zeolithen des Typs A enthalten. Der Zeolith A weist die allgemeine Formel

$$1{,}0 \pm 0{,}2\ M_2O \cdot Al_2O_3 \cdot 2{,}0 \pm 0{,}5\ SiO_2 \cdot y\ H_2O\ n$$

auf, wobei M ein Metallkation, wie z.B. Natrium- oder Kalium-Kation, n seine Wertigkeit und y ein Wert bis zu 5 bedeuten.

Vorzugsweise kann die Gussasphaltmischung einen Zeolithen des Typs A enthalten, welcher nach Verfahren gemäss DE-AS 23 33 068, DE-AS 24 47 021, DE-AS 25 17 218, DE-OS 26 51 485, DE-OS 26 51 446, DE-OS 26 51 436, DE-OS 26 51 419, DE-OS 26 51 420 und/oder DE-OS 26 51 437 hergestellt wird. Der eingesetzte Zeolith A kann auch nach anderen bekannten Verfahren hergestellt werden, z.B. gemäss DE-PS 10 38 017 oder DE-AS 16 67 620.

Vorzugsweise kann der eingesetzte Zeolith A die folgenden physikalisch-chemischen Daten aufweisen:

| | | |
|---|---|---|
| Glühverlust nach DIN 55 921 | | <24 % |
| Kornverteilung (Coulter-Counter) | | |
| Anteil | <15 Mikrometer: | 96–100 Gew.-% |
| | <10 Mikrometer: | 95– 99 Gew.-% |
| | < 1 Mikrometer: | < 5 Gew.-% |

Weiterhin kann die erfindungsgemässe Gussasphaltmischung als pulverförmigen Zeolithen einen Zeolithen des Typs Y mit der allgemeinen Formel

$$0{,}9 \pm 0{,}2\ M_2O \cdot Al_2O_3 \cdot X\ SiO_2 \cdot y\ H_2O\ n$$

enthalten, wobei M ein Metallkation, wie z.B. Natrium- oder Kaliumkation, n seine Wertigkeit, x ein Wert grösser als 3 und y ein Wert bis 9 bedeuten.

Der eingesetzte Zeolith Y kann die folgenden physikalisch-chemischen Kenndaten aufweisen:

| | | |
|---|---|---|
| Glühverlust nach DIN 55 921 | | <27 % |
| Kornverteilung (Coulter-Counter) | | |
| Anteil | <15 Mikrometer: | 96–100 Gew.-% |
| | <10 Mikrometer: | 85– 99 Gew.-% |
| | < 1 Mikrometer: | <20 Gew.-% |

Dieses zeolithische Molekularsiebpulver kann beispielsweise gemäss DE-AS 10 98 929, DE-AS 12 03 239 oder DE-AS 12 63 056 hergestellt werden.

Weiterhin kann die erfindungsgemässe Gussasphaltmischung als pulverförmigen Zeolithen einen Zeolithen des Typs X mit der allgemeinen Formel

$$0{,}9\pm0{,}2\ M_2O \cdot Al_2O_3 \cdot 2{,}5\pm0{,}5\ SiO_2 \cdot y\ H_2O\ n$$

enthalten, wobei M ein Metallkation, z.B. Natrium- oder Kaliumkation, n seine Wertigkeit und y ein Wert bis zu 8 bedeuten.

Dieser pulverförmige Zeolith kann nach DE-PS 10 38 016, DE-PS 11 38 383 oder DE-OS 20 28 163 hergestellt werden.

Der eingesetzte Zeolith X kann die folgenden physikalisch-chemischen Daten aufweisen:

| | | |
|---|---|---|
| Glühverlust (DIN 55 921) | | 27 Gew.-% |
| Korngrössenverteilung (Coulter-Counter) | | |
| Anteil | <15 Mikrometer: | 96–100 Gew.-% |
| | < 10 Mikrometer: | 85– 99 Gew.-% |
| | < 1 Mikrometer: | 20 Gew.-% |

Weiterhin kann die erfindungsgemässe Gussasphaltmischung als pulverförmigen Zeolithen einen Zeolithen des Typs P enthalten. Die Bezeichnung Zeolith P ist synonym mit der Bezeichnung synthetischer Phillipsit und Zeolith B. Beispielsweise kann man den Zeolithen P nach dem Verfahren gemäss der FR-PS 1 213 628 (Bayer AG) herstellen.

Der eingesetzte Zeolith P kann die folgenden physikalisch-chemischen Kenndaten aufweisen:

| | | |
|---|---|---|
| Glühverlust (DIN 55 921) | | 15 Gew.-% |
| Korngrössenverteilung (Coulter-Counter) | | |
| Anteil | <15 Mikrometer: | 99–100 Gew.-% |
| | <10 Mikrometer: | 97– 99 Gew.-% |
| | < 1 Mikrometer: | 20 Gew.-% |

Die erfindungsgemässe Gussasphaltmischung kann weiterhin als pulverförmigen Zeolithen Hydroxysodalith mit der allgemeinen Formel

$$Na_2O \cdot Al_2O_3 \cdot 2\ SiO_2 \cdot 2{,}5\ H_2O$$

enthalten. Hydroxysodalith kann beispielsweise aus Zeolith A mittels Kochen in wässriger Natronlauge hergestellt werden (vgl. D.W. Breck «Zeolite molecular sieves», Seite 275 (1974) Wiley Interscience Publication).

Der eingesetzte Hydroxysodalith kann die folgenden physikalisch-chemischen Kenndaten aufweisen:

| | | |
|---|---|---|
| Glühverlust (DIN 55 921) | | 15 Gew.-% |
| Korngrössenverteilung (Coulter-Counter) | | |
| Anteil | <15 Mikrometer: | 99–100 Gew.-% |
| | <10 Mikrometer: | 90– 99 Gew.-% |
| | < 1 Mikrometer: | 10 Gew.-% |

In einer weiteren Ausführungsform der Erfindung kann die erfindungsgemässe Gussasphaltmischung ein Gemisch aus den angegebenen Zeolithen enthalten. Dieses Gemisch kann sowohl durch Mischen der reinen Zeolithe als auch durch direkte Synthese mittels des Fällverfahrens hergestellt werden. Gemische, welche direkt hergestellt werden können, können Gemische der Zeolithe A und P, der Zeolithe A und X, der Zeolithe A und Hydroxysodalith, der Zeolithe P und X oder der Zeolithe P und Y sein. In einer vorzugsweisen Ausführung kann die Gussasphaltmischung ein Gemisch aus Zeolith X und Zeolith P im Verhältnis 80 bis 5 zu 20 bis 95 enthalten.

Ein derartiges Gemisch kann beispielsweise gemäss DE-OS 20 28 163, Seite 15, Tabelle 3, Beispiel 3 mittels eines Fällverfahrens hergestellt werden.

Die Zugabe von gefällter Kieselsäure allein auf die Gussasphaltmasse führt zu einer Reduzierung der Eindringtiefe, d.h., zu einer Erhöhung der Verformungsstabilität. Gleichzeitig muss die Verarbeitungstemperatur um 20°C erhöht werden, was eine Verringerung der Verarbeitungswilligkeit des Gussasphaltes anzeigt.

Wird kristalliner synthetischer Zeolith der Asphaltmischung zugegeben, so reduziert sich die Eindringtiefe und die Verarbeitungstemperatur.

Gibt man der Gussasphaltmasse gefällte Kieselsäure und kristallinen, synthetischen Zeolithen zu, so wird die Eindringtiefe deutlich erniedrigt, die Verarbeitungstemperatur jedoch nur unwesentlich erhöht. Mit einer Veränderung des Verhältnisses von gefällter Kieselsäure und kristallinem synthetischem Zeolithen lassen sich Korrekturen des Temperaturverhaltens erreichen. Dies bedeutet, dass Zeolith in erhöhter Zugabe zu geschmeidigeren Gussasphaltmassen führt, eigenständig eine Erhöhung der Verformungsstabilität erreicht, die Kombination von gefällter Kieselsäure aber den deutlichsten bautechnischen Vorteil innerhalb der Versuchsreihe erbringt.

Die für die Verarbeitungswilligkeit (Giess- Ausbreit- und Glättfähigkeit) durch die Zugabe von gefällter Kieselsäure erfolgte unangenehme Stabilitätsversteifung wird duch den wasserabspaltenden Zeolith in eine streichfähige Masse über eine gewisse Zeitspanne versetzt. Der erkaltete Belag nach Abschluss aller Verarbeitungsvorgänge zeigt dann jedoch eine geringere Eindringtiefe bzw. einen erhöhten Verformungswiderstand, wozu der Zeolith selbst noch zur Verbesserung beiträgt. Die kombinierte Anwendung von gefällter Kieselsäure und kristallinem, synthetischem Zeolithen führt zu einem in der Stabilität und damit zu einem in der Belastbarkeit verbesserten Gussasphalt. Dieser höhere Verformungswiderstand wird im Strassenbau bei Sonderanwendungen gewünscht. Sonderbeläge finden Verwendung auf Brücken, stark frequentierten Ampelkreuzungen, Rampen etc. Industriefussböden wird eine hohe Belastbarkeit abgefordert. Werks- und Lagerhallen sollen Regale, Paletten, Maschinen usw. aufnehmen. Die grossen Lasten werden oft nur über kleine Druckauflageflächen (Regalständer) auf den Fussboden übertragen. Unerwünschte Eindrücke sind die Folge. Die Befahrung geschieht mit Gabelstaplern und anderen Fahrzeugen, die starke Belastungen auf den Boden abgeben und damit Spuren hinterlassen.

Besonders vorteilhaft ist, dass die Verbesserung der Stabilität des Gussasphaltes bei Verwendung des Kombinationsadditives Kieselsäure/Zeolith nicht zu Lasten der Verarbeitungsfähigkeit geht. Reduzierte $m^2$-Leistungen Verlegekolonnen sind nicht gewünscht, da sie bei dem hohen Anteil an Lohnkosten am Endpreis des verlegten Fussbodens sich negativ auswirken.

Beispiel

Zur Überprüfung der Eigenschaften der erfindungsgemässen Gussasphaltmischung wurden vergleichende Untersuchungen mit einer bekannten Gussasphaltmischung durchgeführt.

Bezüglich Mineralstoffzusammensetzung und Bitumensorte wurde eine Gussasphaltmischung mit der folgenden Zusammensetzung verwendet:

| | |
|---|---|
| 29,0 Gew.-T | Moräneedelsplitt 2/5 mm |
| 41,0 Gew.-T | Natursand 0/2 mm (gewaschen) |
| 30,0 Gew.-T | Kalksteinmehl |
| 100,0 Gew.-T | Mineral |
| 10,5 Gew.-T | Bitumen B 45/HVB = 9,5 Gew.-% |
| 110,5 Gew.-T | Gussasphalt |

Als Bindemittel wurde ein Gemisch von 65 Gew.-% Bitumen B 45 und 35 Gew.-% Hochvakuumbitumen HVB mit einem Erweichungspunkt Ring + Kugel von 69,0°C gewählt.

Zur Erzielung einer deutlicheren Spreizung der Ergebnisse wurde die Gussasphaltmischung relativ weich eingestellt. Der Bindemittelgehalt und die Bitumensorte wurden darauf abgestimmt.

Bei konstantem Bindemittelgehalt von 9,5 Gew.-% erfolgte die Zugabe der pulverförmigen Additive in Gew.-%, bezogen auf die Gesamtmasse des Gussasphaltes, wobei der Kalksteinmehlanteil um den jeweiligen verringert wurde.

Im einzelnen wurden die Gussasphaltmischungen gemäss Tabelle 1 untersucht:

Tabelle 1

| Mischung Nr. | Bindemittel Bitumen B 45/HVB Gew.-% | Moräne Gew.-% | Natursand Gew.-% | Kalksteinmehl Gew.-% | gefällte Kieselsäure Gew.-% | Zeolith Gew.-% |
|---|---|---|---|---|---|---|
| 1 | 9,5 | 26,2 | 37,1 | 27,2 | – | – |
| 2 | 9,5 | 26,2 | 37,1 | 26,7 | 0,5 | – |
| 3 | 9,5 | 26,2 | 37,1 | 26,2 | – | 1,0 |
| 4 | 9,5 | 26,2 | 37,1 | 25,7 | 0,5 | 1,0 |

Als gefällte Kieselsäure wird eine sprühgetrocknete Kieselsäure mit den folgenden physikalisch-chemischen Kenndaten eingesetzt:

| | | |
|---|---|---|
| Oberfläche nach BET | $m^3/g$ | 190 |
| Mittlere Grösse der Primärteilchen | Nanometer | 18 |
| Mittlere Grösse der Sekundärteilchen | Mikrometer | 80 |
| Stampfdichte (DIN 53 194) | g/l | 220 |
| Trocknungsverlust (DIN 55 921) (2 Std. bei 105°C) | % | 6 |
| Glühverlust 1) (DIN 55 921) (2 Std. bei 1000°C) | % | 5 |
| pH-Wert (DIN 53 200) | | 6,3 |
| $SiO_2$ (DIN 55 921) 1) | % | 98 |
| $Al_2O_3$ | % | 0,2 |
| $Fe_2O_3$ | % | 0,03 |
| $Na_2O$ | % | 1 |
| $SO_3$ | % | 0,8 |

| | | |
|---|---|---|
| Siebrückstand nach Mocker (DIN 53 580) | % | 0,5 |
| Ölzahl (nach DIN 53 199) | % | 230 |

[1] bezogen auf die 2 Stunden bei 105°C getrocknete Substanz
[2] bezogen auf die 2 Stunden bei 1000°C getrocknete Stubstanz

Als Zeolith wird ein Zeolith des Typs A verwendet, welcher gemäss der DE-OS 26 51 436 hergestellt wurde und das Teilchenspektrum gemäss Figur 3 aufweist.

Figur 1 zeigt die Eindringtiefe in Abhängigkeit von der Prüfdauer bei 22°C und 1 $cm^2$ Stempelfläche.

Figur 2 zeigt die Eindringtiefe in Abhängigkeit von der Prüfdauer bei 40°C und 5 $cm^2$ Stempelfläche.

Verarbeitbarkeit

Die Zugabe der Additive verändert die Verarbeitbarkeit des Materials. Darüber hinaus kann die Verarbeitbarkeit aber auch über die Mischgutzusammensetzung sowie die Bindemittelsorte und die Verarbeitungstemperatur gesteuert werden.

Um den Einfluss der Additive auf die Verarbeitbarkeit zu erfassen, wurde bei sonst konstanter Mischgutzusammensetzung die Verarbeitungstemperatur variiert. Ein Mass für die Verarbeitbarkeit ist dabei die erforderliche Verarbeitungstemperatur zur Erzielung einer bestimmten Konsistenz des Mischgutes.

Die Konsistenz wurde als Ablaufzeit von 35 Sekunden über eine schiefe Ebene mit konstanter Neigung und konstanten Abmessungen definiert. Das heisst, es wurde jeweils die Temperatur bestimmt, die zum Ablaufen des Mischgutes über die schiefe Ebene in 35 Sekunden erforderlich ist.

Die ermittelten Ergebnisse sind in der Tabelle 2 zusammengestellt.

Tabelle 2

| Mischung Nr. | Zugabe gefällte Kieselsäure Gew.-% | Zugabe Zeolith Gew.-% | erforderliche Verarbeitungstemperatur Gew.-% |
|---|---|---|---|
| 1 | – | – | 220 |
| 2 | 0,5 | – | 240 |
| 3 | – | 1,0 | 210 |
| 4 | 0,5 | 1,0 | 230 |

Zur Bestimmung der Standfestigkeit der einzelnen Mischungen wurde der Eindruckversuch mit dem ebenen Stempel nach DIN 1996, Teil 13 durchgeführt.

Dabei wurde neben der bei Estrichen üblichen Prüfung bei 22°C und dem 1 $cm^2$-Stempel auch die Prüfung bei 40°C und dem 5 $cm^2$-Stempel vorgenommen.

Die ermittelten Werte sind in der Tabelle 3 aufgeführt.

Tabelle 3

| Mischung Nr. | Eindringtiefe (mm) 22°C/$5^h$ | 40°C/$0,5^h$ | 40°C/$1^h$ | 40°C/$1,5^h$ |
|---|---|---|---|---|
| 1 | 6,6 | 5,6 | 7,1 | 8,1 |
| 2 | 3,9 | 3,4 | 4,1 | 4,5 |
| 3 | 4,6 | 4,0 | 5,0 | 5,5 |
| 4 | 2,9 | 2,3 | 2,7 | 2,9 |

Der Verlauf der Eindringtiefe in Abhängigkeit von der Prüfdauer ist in den Figuren 1 und 2 grafisch dargestellt.

Figur 1 zeigt die Eindringtiefe in Abhängigkeit von der Prüfdauer bei 22°C und 1 $cm^2$ Stempelfläche.

Figur 2 zeigt die Eindringtiefe in Abhängigkeit von der Prüfdauer bei 40°C und 5 $cm^2$ Stempelfläche.

Sowohl die Zugabe von gefällter Kieselsäure als auch die von kristallinem, synthetischem pulverförmigem Zeolithen reduziert gegenüber der bekannten Gussasphaltmischung die Eindringtiefe, wobei sich bei gefällter Kieselsäure deutlich günstigere Werte ergeben. Während jedoch bei der Zugabe von gefällter Kieselsäure die Verarbeitungstemperatur um 20°C auf 240°C erhöht werden muss, wird duch Zugabe von kristallinem, synthetischem pulverförmigem Zeolithen die Verarbeitbarkeit verbessert.

Die kombinierte Anwendung von 0,5 Gew.-% gefällter Kieselsäure und 1,0 Gew.-% kristallinem, synthetischem, pulverförmigem Zeolithen bringt bei einer nur unwesentlichen Anhebung der Verarbeitungstemperatur von 10°C eine erhebliche Reduzierung der Eindringtiefe.

In dieser kombinierten Anwendung, bei der die Standfestigkeit der Masse wesentlich verbessert, die Verarbeitbarkeit aber nur unerheblich zum Nachteil verändert wird, sind eindeutige Vorteile der erfindungsgemässen Gussasphaltmischung zu sehen.

**Patentansprüche**

1. Gussasphaltmischung, enthaltend 0,2 bis 5 Gew.-% eines kristallinen, pulverförmigen, synthetischen Zeolithen oder Zeolithgemisches, bezogen auf die gesamte Mischung.

2. Gussasphaltmischung gemäss Anspruch 1, dadurch gekennzeichnet, dass sie zusätzlich 0,1 bis 2 Gew.-% gefällte Kieselsäure, bezogen auf die gesamte Mischung enthält.

**Claims**

1. A mastic asphalt mixture, containing from 0.2 to 5% by weight of a crystalline, pulverulent, synthetic zeolite or zeolite mixture, based on the total mixture.

2. A mastic asphalt mixture according to claim 1, characterised in that it also contains from 0.1 to 2% by weight of precipitated silica, based on the total mixture.

**Revendications**

1. Mélange pour asphalte coulé, caractérisé en ce qu'il contient 0,2 à 5% en poids d'une zéolithe synthétique cristallisée en poudre ou d'un mélange de zéolithes, calculé sur le total du mélange.

2. Mélange pour asphalte coulé suivant la revendication 1, caratérisé en ce qu'il contient en supplément 0,1 à 2% en poids d'acide silicique précipité, calculé sur le total du mélange.

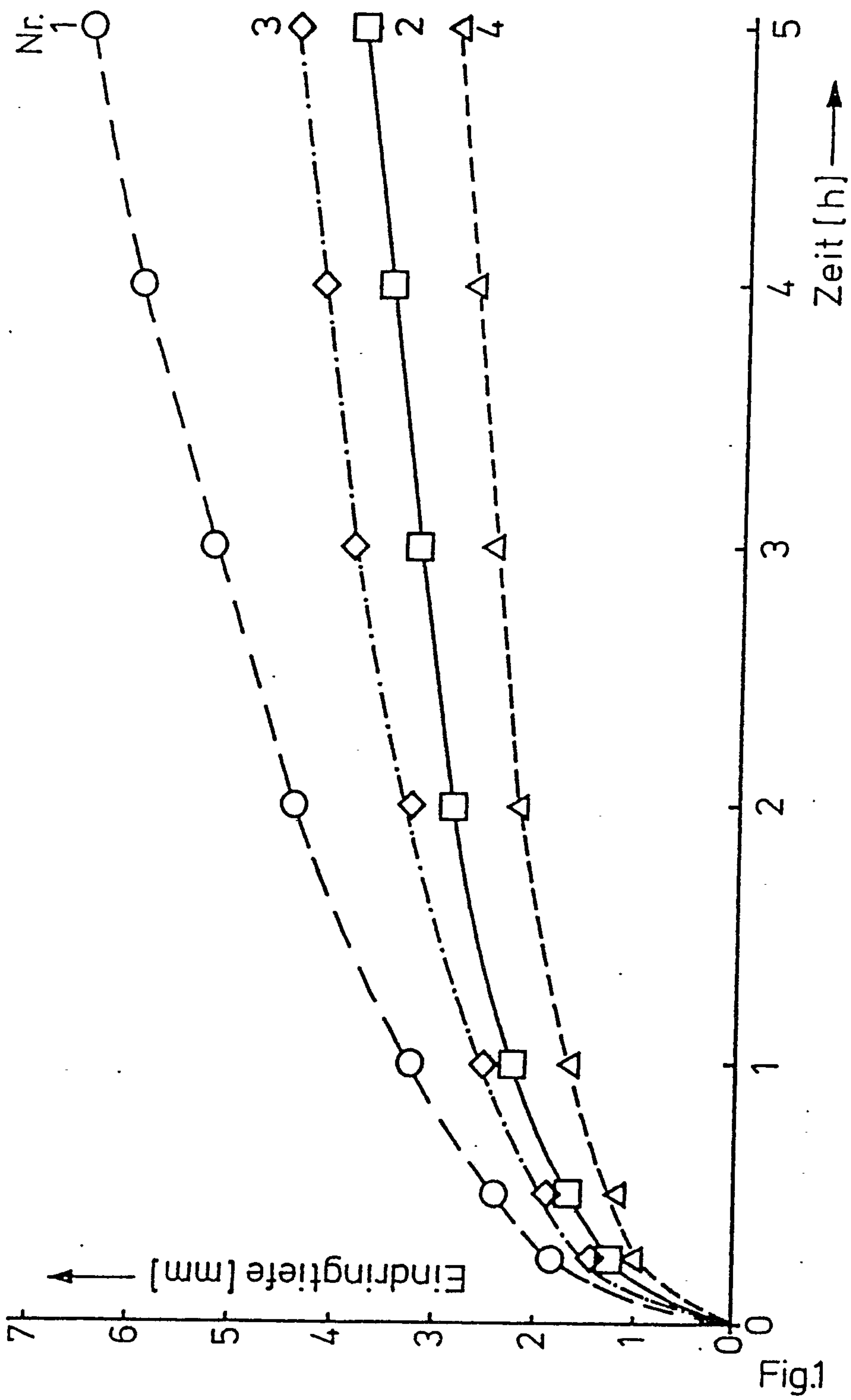


Fig.1

Fig.2

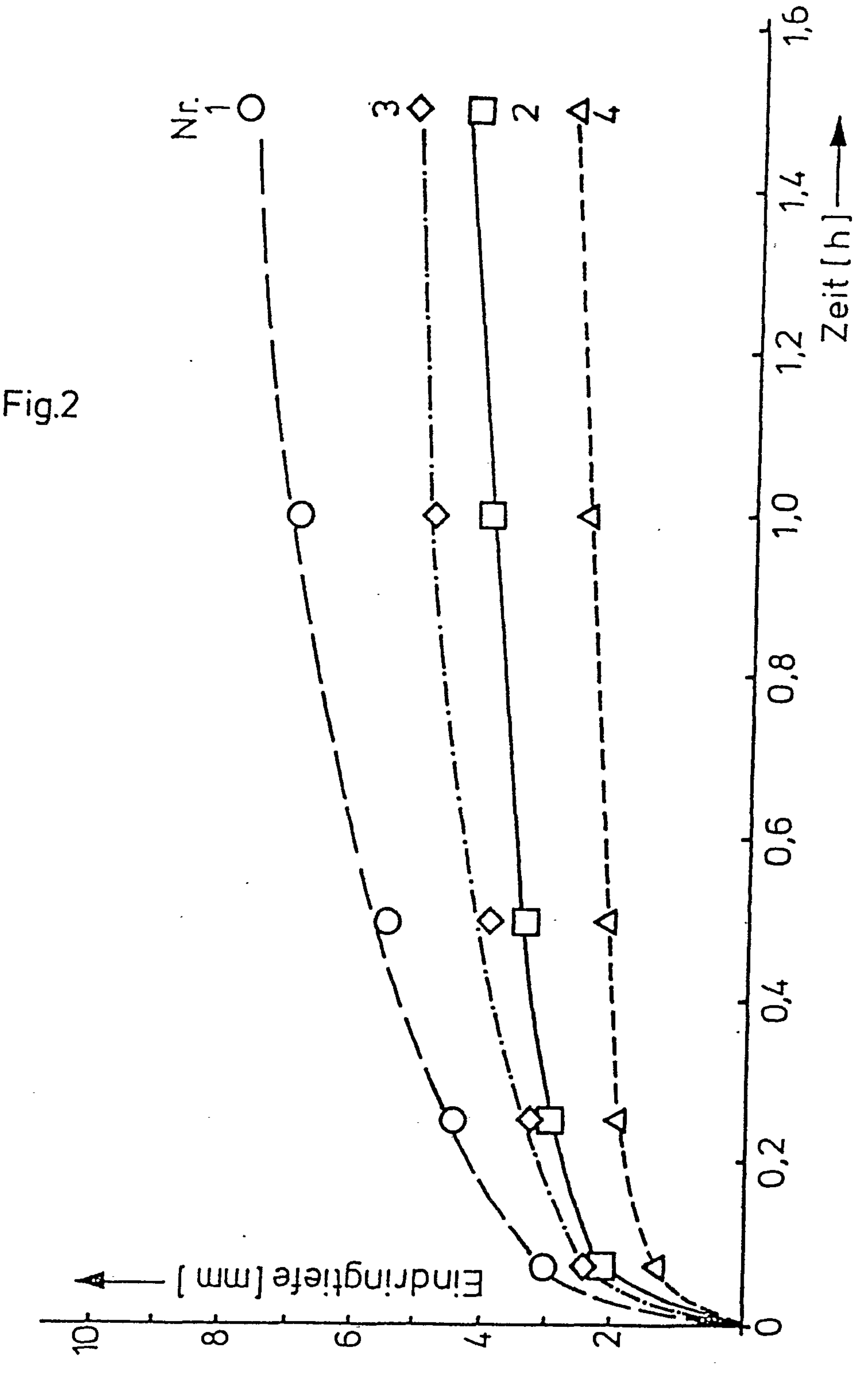

Fig.3

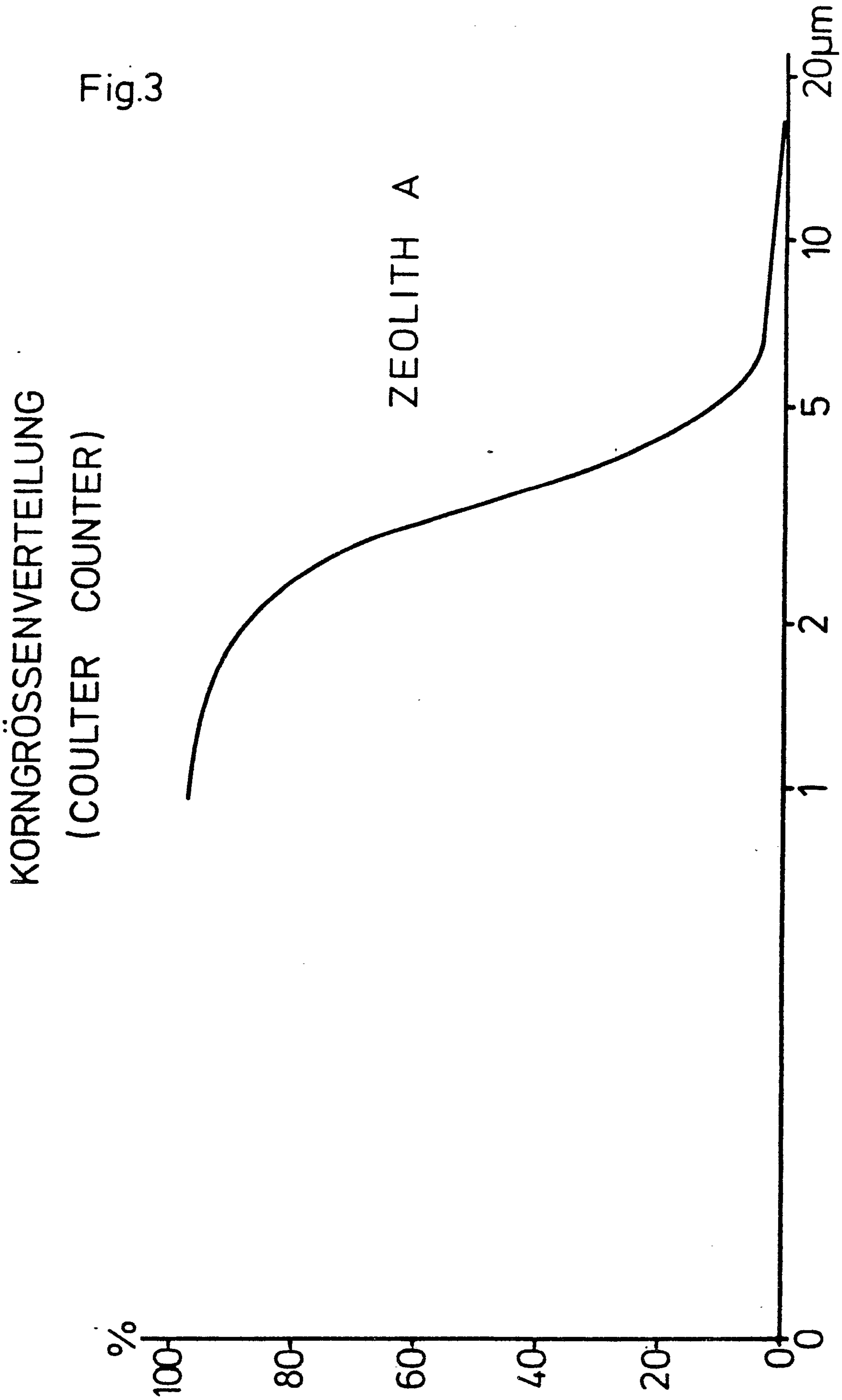
KORNGRÖSSENVERTEILUNG
(COULTER COUNTER)
ZEOLITH A
%
100
80
60
40
20
0
0
1
2
5
10
20µm